# EUROPÄISCHE PATENTANMELDUNG

(11) **EP 1 008 838 A1**
(43) Veröffentlichungstag der Anmeldung: **14.06.2000**
(21) Anmeldenummer: 99123637.3
(22) Anmeldetag: 27.11.1999
(51) Int. Cl.: G01F 13/00, B65G 33/18

(54) **Doppelschneckendosierer**

(30) Priorität: 07.12.1998 DE 19856312
(71) Anmelder: Schenck Process GmbH, 64293 Darmstadt (DE)
(72) Erfinder: Törner, Ludger, 64859 Eppertshausen (DE); Heinrici, Harald, 64584 Biebesheim (DE); Ahlmer, Peter, 64283 Darmstadt (DE)
(74) Vertreter: Behrens, Helmut, Dipl.-Ing.

(57) **Zusammenfassung**

Die Erfindung betrifft einen Doppelschneckendosierer für volumetrische und gravimetrische Dosieraufgaben. Dabei sind zwei horizontal parallel nebeneinander kämmend angeordnete Dosierschnecken (3, 11) vorgesehen, deren Lagerung (2, 12) und Antriebselemente (1, 13) horizontal gegenüberliegend angeordnet sind. Diese Doppelschneckendosierer sind für sehr kleine Förderstärken und anhaftende Schüttgüter vorgesehen, wobei die einzelnen Dosierschnecken (3, 11) Durchmesser von 2 bis 15 mm aufweisen.

## Beschreibung

Die Erfindung betrifft einen Doppelschneckendosierer gemäß dem Oberbegriff des Patentanspruchs 1.

Doppelschneckendosierer werden vorzugsweise für Schüttgüter eingesetzt, die zur Anhaftung neigen. Dabei werden die beiden Schnecken nach Möglichkeit so dicht nebeneinander angeordnet, daß sie kämmend ineinandergreifen und dadurch eventuelle Anhaftungen lösen können. Diese Doppelschnecken werden sowohl für volumetrische als auch für gravimetrische Dosiereinrichtungen verwandt. Dabei hängt die Dosiergenauigkeit nicht unwesentlich von der selbstreinigenden Wirkung dieser Doppelschneckenanordnung ab.

Aus dem Fachaufsatz von G. Vetter und H. Wolfschaffner, "Entwicklungslinien der Schüttguttechnik", Fachzeitschrift Chemie-Ing-Tech, 62 (1990), Nr.9, Seite 695 bis 706 sind Dosiereinrichtungen mit zwei Wellenanordnungen bekannt, die mit unterschiedlich dicht kämmenden Dosierschnecken ausgerüstet sind, um die Schüttgutanhaftungen zu lösen. Allerdings besteht in der Praxis insbesondere bei Doppelschneckendosierern für kleine Förderstärken die Schwierigkeit, bei dichtkämmenden Dosierschnecken die Antriebs- und Lagerung und so dicht nebeneinander anzuordnen, daß eine gute Selbstreinigung gewährleistet wird.

Aus der WO 94/10049 ist ein Doppelschneckendosierer bekannt, bei dem unter dem Auslauf des Vorratsbehälters horizontal zwei Dosierschnecken angeordnet sind. Diese sind an einer gemeinsamen Seite gelagert und werden dort durch eine Getriebeanordnung angetrieben. Dabei sind die Antriebsritzel der einzelnen Dosierschnecken axial gegeneinander versetzt, so daß man auch bei Dosierern für kleine Förderstärken die beiden Dosierschnecken relativ dicht zueinander anordnen kann. Da aber auch bei dieser Dosiervorrichtung durch die Lagerung bestimmte Kräfte aufgenommen werden müssen, können bestimmte Lageraußendurchmesser nicht unterschritten werden, so daß dadurch bestimmte Mindestabstände zwischen den Doppelschnecken einzuhalten sind. In der Praxis werden deshalb bei Doppelschneckendosierern Förderschneckendurchmesser von unter 15 mm in der Regel nicht angeboten. Allerdings werden für einige Dosierprozesse auch Zuschlagstoffe benötigt, die mit Dosiereinrichtungen sehr kleiner Förderstärken hinzugegeben werden müssen. Bei stark anhaftenden Zuschlagstoffen werden dabei nicht selten Doppelschneckendosierer benötigt, deren Schneckendurchmesser in Bereichen von 2 bis 15 mm liegen müßten.

Der Erfindung liegt deshalb die Aufgabe zugrunde, einen Doppelschneckendosierer der eingangs genannten Art so zu verbessern, daß auf einfache Art und Weise sehr kleine Achsabstände bei selbstreinigenden miteinander kämmenden Dosierschnecken realisierbar sind.

Diese Aufgabe wird durch die im Patentanspruch 1 angegebene Erfindung gelöst. Weiterbildungen und vorteilhafte Ausführungsbeispiele der Erfindung sind in den Unteransprüchen angegeben.

Die Erfindung hat den Vorteil, daß durch die einseitig gegeneinander gerichtete Lagerung und Antrieb nahezu ein beliebig kleiner Achsabstand einhaltbar ist, der lediglich vom Wellendurchmesser der Dosierschnecken abhängig ist. Dabei sind mit solch einer Doppelschneckendosiervorrichtung auch stark anhaftenden pulverförmige Schüttgüter in geringen Förderstärken dosierbar, da auch hier eine hervorragende Selbstreinigungswirkung gewährleistet ist.

Die Erfindung hat weiterhin den Vorteil, daß bei derartigen Doppelschneckendosierern für geringe Förderstärken keine bestimmten Lageraußendurchmesser einhaltbar sind, so daß auch Serienlager einsetzbar sind. Gleichzeitig sind auch einfache Antriebsvorrichtungen einsetzbar, da der Durchmesser des Antriebselements unabhängig vom Abstand der Dosierschnecken gewählt werden kann.

Bei einer besonderen Ausbildungsart der Erfindung ist es besonders vorteilhaft, die Schneckenabstände radial verstellbar zu gestalten, so daß auf einfache Art und Weise austauschbare Dosierschnecken mit unterschiedlichen Durchmessern einsetzbar sind, um eine Anpassung an unterschiedliche Förderstärken oder unterschiedliche Schüttgutarten zu erreichen. Dabei können die unterschiedlichen Außendurchmesser der Dosierschnecken durch Kunststoffhalbschalen in den Dosierkanälen ausgefüllt werden, so daß ein Doppelschneckendosierer mit unterschiedlichen Dosierschneckendurchmessern betrieben werden kann.

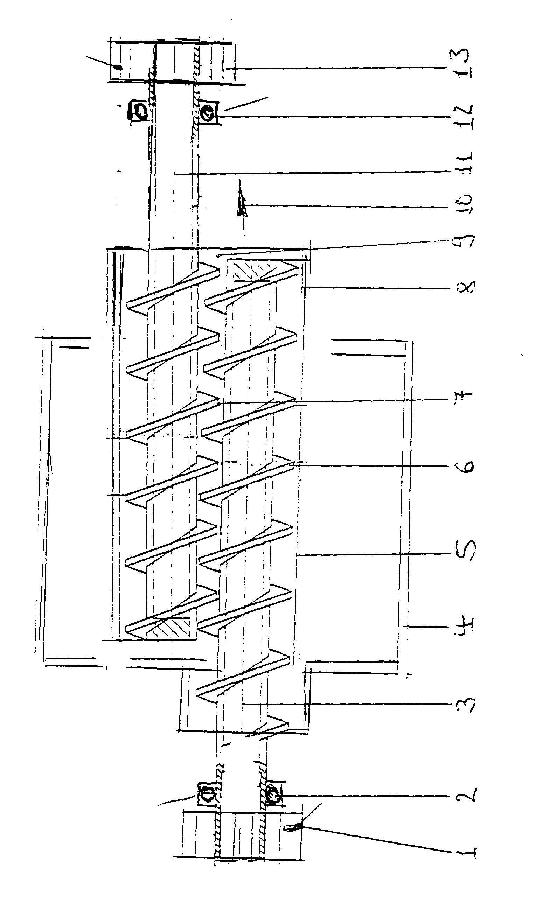

Die Erfindung wird anhand eines Ausführungsbeispiels, das in der Zeichnung dargestellt ist, näher erläutert. Die Zeichnung zeigt eine schematische Darstellung der Schneckenanordnung eines Doppelschneckendosierers. Die beiden Dosierschnecken 3, 11 sind in der Zeichnung in Draufsicht dargestellt. Dabei ist oberhalb der Dosierschnecken 3, 11 ein Vorratsbehälter 4 vorgesehen, der in einem Auslauf 5 endet. Die Dosierschnecken 3, 11 sind parallel und horizontal nebeneinander angeordnet. Die beiden Dosierschnecken 3, 11 können aber auch übereinander vorgesehen werden. Nach unten sind die beiden Dosierschnecken 3, 11 von einem Gehäuseteil 8 umgeben. Das umgebende Gehäuseteil 8 ragt in Förderrichtung 10 über den Auslaufbereich 5 des Vorratsbehälters 4 hinaus und besitzt eine Austragsöffnung 9, durch die das dosierte Schüttgut dem weiteren Prozeßvorgang zugeführt wird. Dabei ist das Gehäuseteil 8 der Form der Dosierschnecken 3, 11 angepaßt. Die Dosierschnecken 3, 11 sind beide gleich ausgebildet und bestehen aus einer axialen Welle, mit einer Wendel 6, 7. Die Dosierschnecken 3, 11 können aber auch als wellenlose Wendeln oder als Vollblattwendeln ausgebildet sein. Die Dosierschnecken 3, 11 sind an einer Seite gelagert und dort mit einem Antriebsritzel 1, 13 versehen. Die Lagerung ist als Kugellager 2, 12 ausgebildet, kann aber auch durch andere Lagerformen ausgeführt werden.

Das Antriebsritzel 1, 13 steht mit einem nicht dargestellten Antriebsmittel in Verbindung, das meist durch einen regelbaren Elektromotor gebildet wird. Die erste Dosierschnecke 3 ist so eingebaut, daß die Lagerung 2 und das Antriebsritzel 1 in axialer Richtung gegenüber der Austragsöffnung 9 angeordnet ist. Die zweite Dosierschnecke 11 ist parallel neben dieser eingebaut, wobei deren Lagerung 12 und Antriebsritzel 13 gegenüberliegend der Lagerung 2 und des Antriebsritzels 1 der ersten Dosierschnecke 3 angeordnet ist. Die Lagerung 12 und das Antriebsritzel 13 der zweiten Dosierschnecke 11 befindet sich deshalb im Bereich der Austragsöffnung 9. Beide Dosierschnecken 3, 11 sind so dicht nebeneinander angebracht, daß die Schneckenwendeln 6, 7 ineinander kämmend rotieren. Dabei ist der Antrieb 1, 13 beider Dosierschnecken 3, 11 zwangssynchronisiert, so daß die Schneckenwendeln 6, 7 nicht beschädigt werden können. Zum synchronisierten Antrieb ist noch eine weitere nicht dargestellte Antriebswelle vorgesehen, die beide Antriebsritzel 1, 13 kraftschlüssig miteinander verbindet, so daß beide Dosierschnecken 3, 11 mit der gleichen Drehzahl umlaufen.

Während des Betriebs der Dosiereinrichtung wird deshalb das Schüttgut vom Vorratsbehälterauslauf 5 zur Austragsöffnung 9 gefördert. Dabei ist dieser Doppelschneckendosierer für die Dosierung stark anhaftender pulverförmiger Schüttgüter vorgesehen, die nur mit geringer Förderstärke ausgetragen werden sollen. Deshalb kommen für eine gleichmäßige Dosierung nur Förderschnecken 3, 11 in Betracht, die sehr kleine Durchmesser aufweisen. Für derartige Doppelschneckendosierer sind Schneckendurchmesser von ca. 2 bis 15 mm vorgesehen. Um bei diesen Doppelschneckendosierern eine selbstreinigende Wirkung durch die kämmenden Wendeln 6, 7 zu erreichen, müssen Wellenabstände von ca. 1 bis 10 mm eingehalten werden. Derartige Dosierer werden häufig in der chemischen Industrie oder in der Lebensmittelindustrie benötigt, um bestimmte Zuschlagstoffe in einen größeren Prozeßablauf zuzugeben. Da bei diesen Prozessen häufig die Dosierwendeln austauschbar ausgebildet sein müssen, wird hierdurch meist der erforderliche Wellenabstand durch derartige Ankoppelvorrichtungen noch erhöht. So ist bei einer besonderen Ausführungsart zusätzlich vorgesehen, auch Dosiervorrichtungen mit anpaßbaren Wendeldurchmessern vorzusehen. Dazu ist der radiale Abstand der Dosierschnecken 3, 11 verstellbar ausgestaltet, wobei dann zwischen den gehäuseseitigen Austragskanälen Kunststoffhalbschalen zur Adaption vorgesehen werden können. Dadurch ist ein Doppelschneckendosierer ausführbar, der mit verschiedenen Schneckendurchmessern dosieren kann, die dann für verschiedene Schüttgüter einsetzbar sind.

Derartige Doppelschneckendosierer mit horizontal versetzt angeordneten Antriebselementen und Lagerungen sind nicht nur für kleinere Förderstärken einsetzbar, sondern können auch bei Dosierern mit Schneckendurchmessern über 15 mm eingesetzt werden. Mit Doppelschneckendosierern sind auch nicht nur anhaftende Schüttgüter dosierbar, sondern auch andere rieselfähige Schüttgüter. Darüber hinaus können Doppelschneckendosierer auch für schnell fließende Schüttgüter eingesetzt werden, wodurch ein ungehindertes Durchschießen durch die Schnecken verhindert wird.

## Patentansprüche

1. Doppelschneckendosierer mit zwei nebeneinander kämmend angeordneten Dosierschnecken, die in Längsrichtung an einer Seite mit einer Lagerung und Antriebselementen versehen sind, dadurch gekennzeichnet, daß die Lagerung (2, 12) und das Antriebselement (1, 13) jeder Dosierschnecke (3, 11) in Längsrichtung gegenüberliegend angeordnet ist.

2. Doppelschneckendosierer nach Anspruch 1, dadurch gekennzeichnet, daß jede Dosierschnecke (3, 11) als mit einer Wendel (6, 7) versehene Drehwelle, als wellenlose Wendel oder als Vollblattwendel ausgebildet ist, wobei beide Dosierschnecken (3, 11) weitgehend gleich sind.

3. Doppelschneckendosierer nach Anspruch 1 oder 2, dadurch gekennzeichnet, daß die Dosierschnecken (3, 11) radial so dicht nebeneinander angeordnet und ausgebildet sind, daß die Wendel (6) der ersten Dosierschnecke (3) die Wendelzwischenräume der zweiten Dosierschnecke (11) kontinuierlich durchkämmt, so daß im Betrieb eine selbstreinigende Wirkung auch bei anhaftenden Schüttgütern erreichbar ist.

4. Doppelschneckendosierer nach einem der vorhergehenden Ansprüche, dadurch gekennzeichnet, daß die Dosierschnecken (3, 11) nur für kleine Förderstärken vorgesehen sind, wobei die Dosierschnecken (3, 11) Durchmesser von ca. 2 bis 15 mm aufweisen.

5. Doppelschneckendosierer nach einem der vorhergehenden Ansprüche, dadurch gekennzeichnet, daß die Dosierschnecken (3, 11) lösbar mit der Lagerung (2, 12) und den Antriebselementen (1, 13) verbunden sind.

6. Doppelschneckendosierer nach einem der vorhergehenden Ansprüche, dadurch gekennzeichnet, daß der radiale Achsabstand der Dosierschnecken (3, 11) verstellbar ist.
